# EUROPÄISCHE PATENTANMELDUNG

(11) **EP 1 564 705 A2**
(43) Veröffentlichungstag der Anmeldung: **17.08.2005**
(21) Anmeldenummer: 04027508.3
(22) Anmeldetag: 19.11.2004
(51) Int. Cl.: G09B 9/02, G09B 9/04

(54) **Verfahren und Vorrichtung zur Simulation einer manuellen Bedieneinrichtung**

(30) Priorität: 14.02.2004 DE 102004007295
(71) Anmelder: Dr.Ing. h.c.F. Porsche Aktiengesellschaft, 70435 Stuttgart (DE)
(72) Erfinder: Kurrle, Frank, 74385 Pleidelsheim (DE); Sayer, Frank, 71287 Weissach (DE)

(57) **Zusammenfassung**

Die vorliegende Erfindung stellt eine Vorrichtung zur Simulation einer manuellen Bedieneinrichtung bereit mit: einem Hebel (10) mit einem oberen und einem unteren Ende (12, 12'), welcher eine erste Drehachse (11) im wesentlichen senkrecht zur Längserstreckung des Hebels (10) und eine zweite Drehachse (16) im wesentlichen senkrecht zur ersten Drehachse (11) und zur Erstreckung des Hebels (10) aufweist; einem rotatorischen Servomotor (20), welcher läuferseitig an die zweite Drehachse (16) des Hebels (10) gekoppelt ist, zum Bereitstellen eines vorbestimmten Drehmoments bei einer vorbestimmten Ist-Winkellage (32) des Hebels (10); und einem Linearmotor (15), welcher läuferseitig mit dem Hebel (10) gekoppelt ist, zum Bereitstellen einer vorbestimmten Kraft bei einer vorbestimmten Ist-Position (33) des Hebels (10).

## Beschreibung

Die vorliegende Erfindung betrifft ein Verfahren und eine Vorrichtung zur Simulation einer manuellen Bedieneinrichtung, und insbesondere ein Verfahren und eine Vorrichtung zur Simulation der Schalthaptik eines manuellen Schaltgetriebes in einem Kraftfahrzeug.

Zur Herabsetzung des Entwicklungsaufwandes gerade im Kraftfahrzeugbau werden zusehends Anstrengungen zur Simulation des Verhaltens diverser Komponenten oder auch des Fahrverhaltens des Gesamtfahrzeuges auf Rechneranlagen unternommen. Darüber hinaus spielt insbesondere im Premium-Segment des Kraftfahrzeugbaus der Bedienkomfort bzw. die Bedienhaptik der zu bedienenden Einrichtungen eine größer werdende Rolle.

Aus der britischen Offenlegungsschrift GB 2 036 404 ist ein Simulator zur Simulation der Schalthaptik eines Kraftfahrzeuggetriebes beschrieben. Der Simulator entspricht im wesentlichen einem realen Getriebe bzw. der mechanischen Außenschaltung des Getriebes. Neben mechanischen Kraftübertragungselementen ist eine pneumatische Einrichtung vorgesehen, welche das Verhalten des Getriebes beim Schalten wiedergeben. Dadurch werden die groben Bewegungen des Schalthebels realisiert.

In der deutschen Offenlegungsschrift DE 198 55 072 ist eine Vorrichtung zur Simulation einer Kraft, insbesondere einer Schaltkraft eines Getriebesimulators offenbart, welcher ein beweglich gelagertes Stellelement aufweist, das mit einem einer Verstellung des Stellelementes entgegenwirkenden Krafterzeuger beaufschlagbar ist. Darüber hinaus ist ein Getriebe- und Fahrsimulator beschrieben, welcher die Vorrichtung zur Simulation einer Kraft mit dem elastischen Krafterzeuger aufweist. Auch diese Simulationsvorrichtung ist lediglich zur Wiedergabe der Haptik grober Bewegungen des Schalthebels geeignet.

Aus der deutschen Offenlegungsschrift DE 38 08 004 ist ein Verfahren und eine Vorrichtung zum Bewerten der Schaltbetätigungs-Empfindlichkeit eines von Hand zu schaltenden Getriebes bekannt, welches mit einem Gangschalthebel und einer synchronen Getriebeeinrichtung versehen ist, wobei einer von mehreren Getriebezügen in dem von Hand zu schaltenden Getriebe durch die Synchrongetriebe-Einrichtung in einen Kraftübertragungszustand versetzt wird zum Messen zumindest der Last, mit der der Gangschalthebel während einer vorbestimmten Periode innerhalb der Zeit für die Schaltbetätigung des Gangschalthebels beaufschlagt ist. Diese komplexe Vorrichtung zum Bewerten der Schaltbetätigungs-Empfindlichkeit ist mit einem realen mechanischen Getriebe gekoppelt, welches ein kostenaufwendiges System zur Wiedergabe einer vorbestimmten Schalthaptik darstellt, welches nur mit sehr großem Aufwand in der Schalthaptik wunschgemäß modifiziert werden kann.

Die erfindungsgemäße Vorrichtung zur Simulation einer manuellen Bedieneinrichtung mit den Merkmalen des Anspruchs 1, sowie das erfindungsgemäße Verfahren mit den Merkmalen des Anspruchs 9 weist gegenüber den bekannten Lösungsansätzen den Vorteil auf, daß die Simulation einer manuellen Bedieneinrichtung ohne komplexe mechanische Elemente der Bedieneinrichtung bereitgestellt wird. So ist insbesondere keine mechanische Außenschaltung, d.h. keine Umlenkhebel, Seilzug bzw. Schaltgestänge eines realen Getriebes für die Simulationsvorrichtung erforderlich. Außer einem Schalthebel werden sämtliche Komponenten der Bedieneinrichtung, vorzugsweise eines Fahrzeugschaltgetriebes, per Software mit einem Rechenmodell auf einer Rechnereinrichtung nachgebildet und durch einen rotatorischen Servomotor sowie einen Linearmotor simuliert. Bei der Nachbildung im Rechenmodell wird insbesondere das Verhalten des gesamten Antriebsstrangs unter realen Bedingungen, sowie der Einfluß des Gesamtfahrzeugs auf den Antriebsstrang, berücksichtigt. Das dynamische Verhalten eines realen mechanischen Schaltgetriebes wird somit in Echtzeit wiedergegeben.

Die der vorliegenden Erfindung zugrunde liegende Idee besteht im wesentlichen darin, zwei elektrisch ansteuerbare Aktuatoren an einen realen, in zwei Richtungen drehbar gelagerten Hebel zu koppeln und die Aktuatoren derart dynamisch anzusteuern, daß die Bedienhaptik der realen Bedieneinrichtung präzise wiedergegeben wird. Das Simulationsmodell, welches auf einer Rechnereinrichtung als mathematisches Modell vorliegt, ist dabei in der Lage, die mechanischen Größen, d.h. die Kräfte, beispielsweise an der Hand des Bedieners in Echtzeit zu errechnen und an die Aktuatoren abhängig von deren Ist-Position bzw. Winkellage sowie der Ist-Geschwindigkeit bzw. der Ist-Winkelgeschwindigkeit auszugeben.

Mit anderen Worten wird eine Vorrichtung zur Simulation einer manuellen Bedieneinrichtung bereitgestellt mit: einem Hebel mit einem oberen und einem unteren Ende, welcher eine erste Drehachse im wesentlichen senkrecht zur Längserstreckung des Hebels und eine zweite Drehachse im wesentlichen senkrecht zur ersten Drehachse und zur Erstreckung des Hebels aufweist; einem rotatorischen Servomotor, welcher läuferseitig an die zweite Drehachse des Hebels gekoppelt ist, zum Bereitstellen eines vorbestimmten Drehmoments bei einer vorbestimmten Winkellage des Hebels in Richtung der zweiten Drehachse; und einem Linearmotor, welcher läuferseitig mit dem Hebel gekoppelt ist, zum Bereitstellen einer vorbestimmten Kraft bei einer vorbestimmten Ist-Position und/oder der Ist-Geschwindigkeit des Hebels.

In den Unteransprüchen finden sich vorteilhafte Weiterbildungen und Ausgestaltungen der im Anspruch 1 angegebenen Vorrichtung und des im Anspruch 9 angegebenen Verfahrens zur Simulation einer manuellen Bedieneinrichtung.

Gemäß einer bevorzugten Weiterbildung ist der rotatorische Servomotor direkt an die zweite Drehachse und der Linearmotor über eine Schubstange an ein unteres Ende des Hebels gekoppelt, wobei sich der Hebel mit dem unteren Ende über die erste Drehachse hinaus erstreckt.

Gemäß einer weiteren bevorzugten Weiterbildung sind der Linearmotor und der rotatorische Servomotor jeweils an eine Treiberstufe zum Bereitstellen eines vorbestimmten Stromes abhängig von der jeweiligen Ist-Position/Winkellage des Hebels angeschlossen.

Gemäß einer weiteren bevorzugten Weiterbildung ist eine gemeinsame Schnittstelleneinrichtung zum Ausgeben jeweils eines Stromsollwertes in Abhängigkeit von der Ist-Position des Linearmotors und der Winkellage des rotatorischen Servomotors vorgesehen.

Gemäß einer weiteren bevorzugten Weiterbildung ist die Schnittstelleneinrichtung mit einer Rechnereinrichtung zum Erfassen von Ist-Werten und Berechnen und Ausgeben von Sollwerten in Echtzeit, vorzugsweise aus einer Einheit bestehend, verbunden.

Gemäß einer weiteren bevorzugten Weiterbildung ist an dem Hebel eine Krafterfassungseinrichtung zum Erfassen zumindest einer Rückführungsgröße zur Berechnung der Sollwerte in der Rechnereinrichtung vorgesehen.

Gemäß einer weiteren bevorzugten Weiterbildung weist die Krafterfassungseinrichtung Dehnungsmeßstreifen und vorzugsweise Meßverstärker zur Erfassung der Biegung des Hebels auf.

Gemäß einer weiteren bevorzugten Weiterbildung sind der Hebel, der Linearmotor und der rotatorische Servomotor über eine steife Trägereinrichtung miteinander mechanisch gekoppelt.

Gemäß einer weiteren bevorzugten Weiterbildung wird in Abhängigkeit von einer Ist-Position des Linearmotors, von der Winkellage des rotatorischen Servomotors und von einer auf den Hebel wirkenden Ist-Kraft anhand eines Rechenmodells in Echtzeit jeweils ein Soll-Kraft/Drehmomentwert der Motoren auf einer Rechnereinrichtung ermittelt.

Gemäß einer weiteren bevorzugten Weiterbildung wird der in Echtzeit errechnete Kraft/Drehmomentwert über einen Kraft-/Drehmomentregler an eine Schnittstelleneinrichtung weitergegeben, welche jeweils eine Motorendstufe des Linearmotors und des rotatorischen Servomotors zum Bereitstellen eines entsprechenden Stromes zur Kraft/Drehmomenterzeugung ansteuert.

Gemäß einer weiteren bevorzugten Weiterbildung werden Daten und Parameter, welche bei der Simulation generiert und/oder benötigt und/oder verarbeitet werden, über eine Bedienoberfläche als Softwaretool auf einer Rechnereinrichtung überwacht und/oder abgeändert.

Gemäß einer weiteren bevorzugten Weiterbildung wird durch die Simulation die Haptik eines realen Kfz-Getriebes nachgebildet.

Gemäß einer weiteren bevorzugten Weiterbildung fließt eine simulierte Fahrgeschwindigkeit und/oder Fahrwiderstände, insbesondere Luftreibung und/oder eine Steigung, und/oder die Position einer simulierten Kupplung und/oder eine Motordrehzahl und/oder Verspannungen im Antriebsstrang bei simulierter Kurvenfahrt in die Simulation der Schalthaptik für ein Kfz-Getriebe mit ein.

Gemäß einer weiteren bevorzugten Weiterbildung wird über Dehnungsmeßstreifen am Hebel eine Rückführungsgröße gewonnen, welche bei einer Sollwertermittlung zur Ansteuerung der Motoren in einer Rechnereinrichtung eingesetzt wird.

Mit dem erfindungsgemäßen Simulationsverfahren bzw. der erfindungsgemäßen Simulationsvorrichtung kann jedes manuelle Schaltgetriebe ohne eine erforderliche Hardware-Anpassung simuliert werden. Simulationsmodelle des Antriebsstranges, bestehend aus Kupplung, Reifen, Getriebe des Gesamtfahrzeugs, entstehen gleichzeitig zur Konstruktion desselben. Dementsprechend kann die Haptik, d.h. das Schaltgefühl, für den Fahrer, welches vom jeweiligen Getriebe abhängt, unmittelbar, insbesondere in den einzelnen Entwicklungsphasen, überprüft und verifiziert werden. Das Herausfahren von optimalen Parametern für die Konstruktion, beispielsweise des Getriebes, wird ermöglicht. Eine Definition von marken- bzw. fahrzeugtypischen Schalt-Charakteristika ist bereitstellbar, wobei kostenintensive Baustufen bzw. Prototypen der Schaltung die Simulation der Schalthaptik betreffend eingespart werden können.

Außerdem können im Entwicklungsprozeß eines Getriebes vorgeschlagene Maßnahmen zur Verbesserung der Schaltqualität/-haptik direkt getestet werden, ohne kostenintensive Prototypen, zeitintensive Umbaumaßnahmen und/oder kostenintensive Prüfstandläufe zu benötigen. Als weiterer Vorteil wird dem Entwicklungsteam des Getriebes das Treffen von Entscheidungen erleichtert, ob sich ein neuer Aufbau eines Getriebe-Prototyps lohnt, wenn Verbesserungen/Änderungen getestet werden sollen, welche zum aktuellen Zeitpunkt nicht in realer Hardware vorliegen, d.h., ob Änderungen am Getriebe und/oder Antriebsstrang wirklich zum erhofften Ziel einer modifizierten Schalthaptik führen. Neben einem aktiven Schalten mit einer simulierten Schalthaptik können auch gemessene Verläufe, beispielsweise aus einem realen Fahrzeug bzw. von einem Prüfstand, abgespielt werden, da die eingesetzten Aktuatoren den Schalthebel im Rahmen ihres jeweiligen Freiheitsgrades frei bewegen können.

Mit der erfindungsgemäßen Simulationsvorrichtung kann die subjektive Betrachtung des Schaltgefühls bzw. der Schalthaptik objektiviert werden. Der in Echtzeit erfolgende Schaltablauf ermöglicht ein Reagieren auf das Verhalten des Fahrers, d.h. ein lockerer/fester Griff mit viel/wenig Kraft bei langsamem/schnellem Schalten. Des weiteren ist die kompakte Simulationseinrichtung beispielsweise in einem Gesamtfahrzeug-Simulator integrierbar und portabel.

Ein Ausführungsbeispiel der Erfindung ist in den Zeichnungen dargestellt und in der nachfolgenden Beschreibung näher erläutert.

Es zeigen:
- Fig. 1: eine schematische Schrägdraufsicht eines Details einer Simulationsvorrichtung zur Erläuterung einer Ausführungsform der vorliegenden Erfindung;
- Fig. 2: ein schematisches Blockdiagramm einer Simulationsvorrichtung zur Erläuterung der Funktionsweise einer Ausführungsform der vorliegenden Erfindung;
- Fig. 3: ein schematisches Blockdiagramm zur Erläuterung der Funktionsweise einer Ausführungsform der vorliegenden Erfindung; und
- Fig. 4: ein schematisches Blockdiagramm zur Erläuterung einer Ausführungsform der vorliegenden Erfindung.

In den Figuren bezeichnen gleiche Bezugszeichen gleiche oder funktionsgleiche Bestandteile.

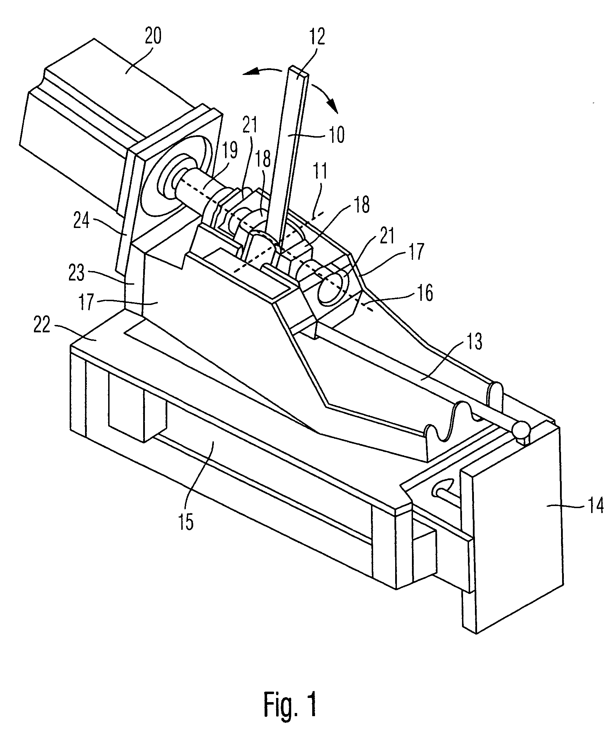

In Fig. 1 ist in einer schematischen Schrägdraufsicht eines Details einer Simulationsvorrichtung gemäß einer bevorzugten Ausführungsform der vorliegenden Erfindung dargestellt. Ein Hebel 10, insbesondere ein Schalthebel, ist über eine erste Drehachse 11, welche quer zur Längserstreckung des Hebels 10 liegt, drehbar gelagert. Der Hebel 10 weist ein oberes Ende 12 und ein unteres Ende (nicht dargestellt) auf. Das untere Ende des Hebels 10 ist gemäß Fig. 1 über eine Schubstange 13 an den Läufer 14 eines Linearmotors 15 gekoppelt. Der Hebel 10 ist über eine zweite Drehachse 16 drehbar in einer Trägereinrichtung 17 gelagert. Die zweite Drehachse 16 verläuft senkrecht zur Erstreckung des Hebels 10 und senkrecht zur ersten Drehachse 11 in Längsrichtung im wesentlichen parallel zur Schubstange 13. Das untere Ende (nicht dargestellt) des Hebels 10 erstreckt sich über die erste Drehachse 11 hinaus nach unten. Vorzugsweise bilden die erste und zweite Drehachse 11, 16 einen gemeinsamen Schnittpunkt. Über eine Führungseinrichtung 18, welche die erste Drehachse 11 aufnimmt und entlang der zweiten Drehachse 16 drehbar gelagert ist, wird der Hebel 10 beweglich geführt.

Über eine Welle 19, welche drehfest mit der drehbar gelagerten Führungseinrichtung 18 verbunden ist, ist ein rotatorischer Servomotor 20 drehfest in Richtung der ersten Drehachse 16 angekoppelt. Mittels Lagereinrichtungen 21 ist die Welle 19 drehbar in Drehrichtung der zweiten Drehachse 16 gelagert. Dabei kommen beispielsweise Kugellager, Wälzlager oder Gleitlager zum Einsatz. Die Trägereinrichtung 17 ist starr an eine Trägerplatte 22 gekoppelt, über welche der Linearmotor 15 starr an die Trägereinrichtung 17 angebunden, vorzugsweise direkt verschraubt, ist. Auch der rotatorische Servomotor 20 ist starr an die Trägereinrichtung 17 gekoppelt, vorzugsweise direkt oder über zumindest ein Zwischenstück bzw. Adapterstück 23, 24 damit verschraubt.

Wird der Hebel 10 in Pfeilrichtung um die erste Drehachse 11 am oberen Ende 12 nach vorne bzw. hinten geschoben, so bewegt sich das untere Ende (nicht dargestellt) des Hebels 10 entsprechend in die entgegengesetzte Richtung, welches über die Schubstange 13 auf den Läufer 14 des Linearmotors 15 entsprechend übertragen wird. Wird der Hebel 10 an seinem oberen Ende 12 um die zweite Drehachse 16 nach links oder rechts bewegt, so überträgt sich diese Bewegung direkt auf die drehbar gelagerte Führungseinrichtung 18 und die Welle 19, welche drehfest mit der Welle des Läufers (nicht dargestellt) des rotatorischen Servomotors 20 verbunden ist. Über die Winkellage des Läufers des rotatorischen Servomotors 20 sowie über die Ist-Position des Läufers 14 des Linearmotors 15 ist die Stellung des Hebels 10 präzise definiert.

Bei vorbestimmten Winkellagen des Hebels 10 kann nun durch eine intelligente Ansteuerung des rotatorischen Servomotors 20 ein Drehmoment generiert werden, welches der Bedienkraft eines Bedieners am Hebel 10 entgegenwirkt. Auf diese Weise sind seitliche Anschläge und vorbestimmte seitliche Kräfte simulierbar, welche zur seitlichen Bewegung des Hebels 10 von einer Bedienperson aufgebracht werden müssen. Ähnlich ist über eine intelligente Ansteuerung des Läufers 14 des Linearmotors 15 in Abhängigkeit von der Ist-Position des Läufers 14 und der Winkellage des Läufers des rotatorischen Servomotors 20 eine vorbestimmte Kraft generierbar, welche einen vorderen oder hinteren Anschlag des Hebels 10 und einen vorbestimmten Kraftverlauf bei der Simulation des Schaltgefühls beim simulierten Einlegen eines Ganges durch einen Bediener nachbildet. Auf diese Weise ist über die Aktuatoren 15, 20 beispielsweise die Möglichkeit einer präzisen Nachbildung der Schalthaptik eines bekannten bzw. über Parameter definierten mechanischen H-Schaltungsgetriebes gegeben.

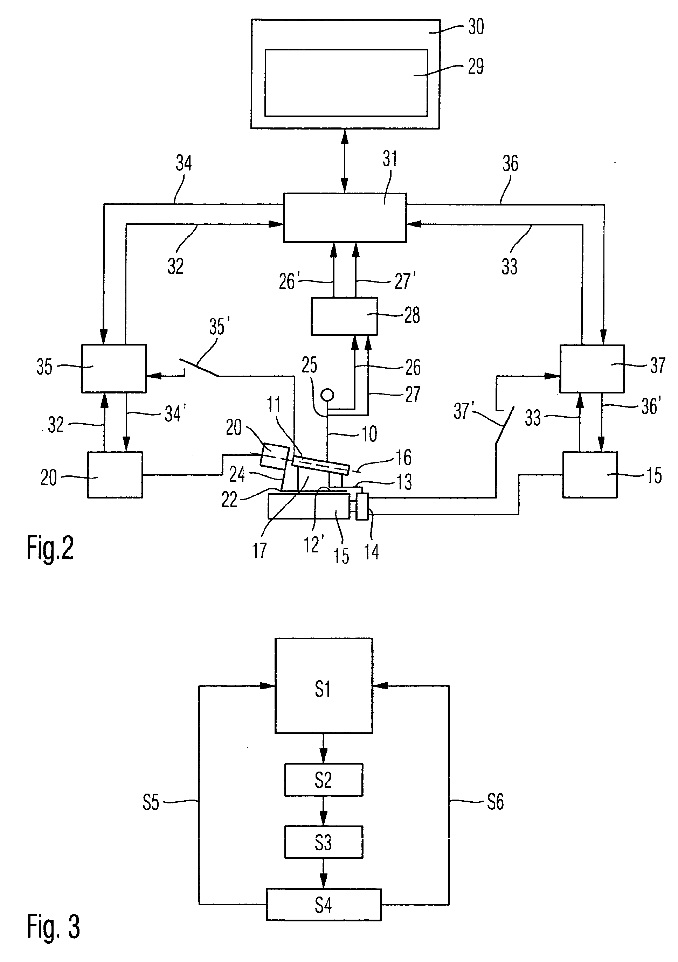

In Fig. 2 ist schematisch ein Blockdiagramm des Gesamtsystems der Simulationsvorrichtung dargestellt. Vereinfacht ist darin die Anordnung gemäß Fig. 1 mit dem Hebel 10 der ersten und zweiten Drehachse 11, 16, dem rotatorischen Servomotor 20, dem Linearmotor 15, dessen Läufer 14 über die Schubstange 13 mit dem unteren Ende 12' des Hebels 10 gekoppelt ist, und mit der starren Trägereinrichtung 17, 22, 24 dargestellt. Gemäß der Ausführungsform in Fig. 2 ist am Hebel eine Kraftmeßeinrichtung 25 vorgesehen, welche vorzugsweise in Form zweier Dehnungsmeßstreifen vorliegt, zur Erfassung der auf den Hebel 10 wirkenden Kräfte angebracht. Durch die auf den Hebel wirkende Kraft 10 resultiert eine leichte Verbiegung des Hebels 10, welche wiederum vom Dehnungsmeßstreifen erfaßt wird und entsprechend in eine indirekte Messung der Kraft über eine elektrische Eigenschaft des Dehnungsmeßstreifens erfolgt. Die von der Krafterfassungseinrichtung 25 generierten Kraft-Ist-Werte 26, 27 jeweils für eine Kraftrichtung, werden vorzugsweise in einem Meßverstärker 28 im Pegel angehoben.

Gemäß Fig. 2 sind im Blockdiagramm der rotatorische Servomotor 20 und der Linearmotor 15 nochmals mit einem separaten Block dargestellt. Eine Rechnereinrichtung 29, vorzugsweise eine Echtzeit-Rechnerkarte, welche mit einem Kraftregler programmiert ist und in welcher ein mathematisches Getriebemodell mit vorbestimmten Parametern impliziert ist, ist beispielsweise in einem Host-PC 30 integriert. Über eine Schnittstelleneinrichtung 31, welche vorzugsweise mit der Rechnereinrichtung 29 integriert ist, wird eine Ist-Winkellage 32 des Läufers des rotatorischen Servomotors 20 sowie eine Ist-Position 33 des Läufers 14 des Linearmotors 15 an die Rechnereinrichtung 29 weitergegeben. Auch die verstärkten Kraftmeßsignale 26', 27' des Meßverstärkers 28 werden über die Schnittstelleneinrichtung 31 an die Rechnereinrichtung 29 weitergegeben.

Unter Zuhilfenahme der Ist-Winkellage 32 und der Ist-Position 33 wird in der Rechnereinrichtung 29 vorzugsweise mit den im Signalpegel verstärkten Kraftmeßwerten 26', 27' für beide Bewegungsrichtungen des Hebels 10 ein Stromsollwert 34 an einer Treiberendstufe 35 des rotatorischen Servomotors 20 und ein Stromsollwert 36 an einer Treiberendstufe 37 des Linearmotors 15 errechnet und ausgegeben. Die Stromsollwerte 34, 36 werden in den Treiberendstufen 35, 37 im Pegel auf verstärkte Stromsignale 34', 36' angehoben. Referenz- bzw. Endlagen schalter 35', 37' der Motoren 15, 20 sind vorzugsweise an die Treiberendstufen 35, 37 zum An-/Abschalten derselben angeschlossen. Die Ansteuerströme 34', 36' generieren in den elektrischen Servomotoren 20, 15 ein vorbestimmtes Drehmoment bzw. eine vorbestimmte Kraft in eine vorbestimmte Richtung.

In der Rechnereinrichtung 29 werden dazu in Echtzeit, in erster Linie abhängig von der Ist-Position 33 sowie der Ist-Winkellage 32, vorbestimmte Kräfte durch die Servomotoren 15, 20 vorgegeben, welche durch einen Bediener, vorzugsweise eine Bedienperson, aufgewendet werden müssen, um den Hebel 10 aus der gegenwärtigen Ist-Position zu verlagern. Somit kann auf einfache Art und Weise die Haptik eines beliebigen Schaltgetriebes nachgebildet und für eine Bedienperson simuliert werden.

In Fig. 3 ist ein schematisches Blockdiagramm zur Erläuterung der Funktionsweise einer bevorzugten Ausführungsform der vorliegenden Erfindung dargestellt. Ein in der Rechnereinrichtung 29 gemäß Fig. 2 in Echtzeit errechneter Kraftverlauf S1 bei einer gewünschten Positionsänderung des Hebels 10 wird an einen Kraftregler S2 weitergegeben. Der Kraftregler S2 ist dabei vorzugsweise Software-technisch auf der Rechnereinrichtung 29 implementiert. Der Kraftregler S2 gibt einen Stromsollwert aus, welcher jeweils einer Treiberendstufe S3 zugeführt wird. Der in den Treiberendstufen S3 verstärkte Stromsollwert wird daraufhin an die Aktuatoren, im vorliegenden Fall an die elektrischen Servomotoren des mechanischen Abschnitts des Schaltsimulators gemäß Fig. 1 S4 weitergegeben. Als Rückführgrößen werden der Rechnereinrichtung zur Berechnung des Kraftverlaufes in Echtzeit Positions-Istwerte S5 des Hebels 10 gemäß Fig. 1 und Kraft Istwerte S6 zugeführt, welche an dem Hebel 10 angreifen, um Sollwerte zur Ansteuerung der Servomotoren 15, 20 gemäß Fig. 1 in Echtzeit zu berechnen.

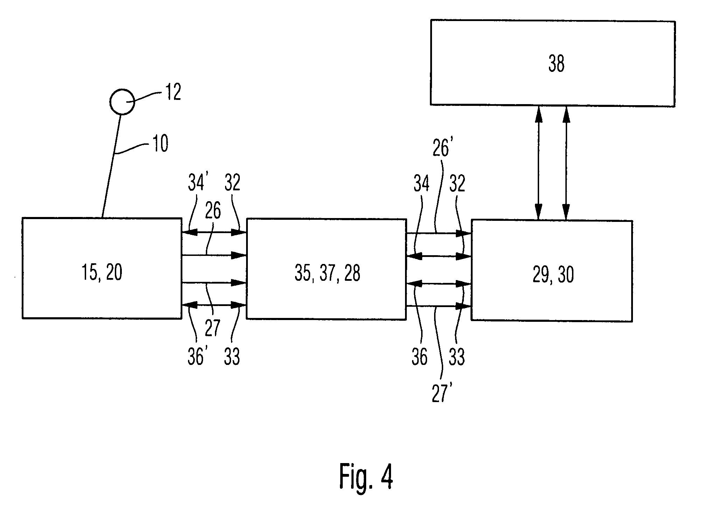

Fig. 4 zeigt ein schematisches Blockdiagramm, in welchem verschiedene Funktionsgruppen zusammengefaßt sind. Der Schalthebel 10 mit dem oberen Ende 12 wird über den rotatorischen Servomotor 20 und den Linearmotor 15 auf im Vorangehenden erläuterte Weise an gewissen Lageveränderungen gehindert bzw. unter Aufwendung einer vorbestimmten Kraft zu einer Lageänderung befähigt. Die Servomotoren 15, 20 weisen integrierte Mittel (nicht dargestellt) zur präzisen Bestimmung der Position ihrer entsprechenden Läufer, d.h. insbesondere Ist-Winkellage 32 sowie Ist-Position 33, auf. Diese werden wie die über eine Kraftmeßeinrichtung 23 erfaßten Kraft-Istwerte 26, 27, welche am Hebel 10 angreifen, über Treiberendstufen 35, 37 an die Rechnereinrichtung 29, beispielsweise in einem Host-PC 30 oder einen Meßverstärker 28, als verstärkte Meßsignale 26', 27' weitergegeben.

Über eine Benutzeroberfläche 38, ein Softwaretool zur Betrachtung und Änderung vorbestimmter Daten bzw. Parameter, ist das Verhalten und damit insbesondere die Bedienhaptik konfigurierbar, welche in der Rechnereinrichtung 29 mit Hilfe eines mathematischen Modells generiert wird. Von der Rechnereinrichtung 29 werden mit Hilfe des mathematischen Modells unter der Vorgabe vorbestimmter Parameter berechnete Stromsollwerte 34, 36 an die entsprechenden Treiberendstufen 35, 37 weitergegeben, und dort in verstärkte Stromansteuersignale 34', 36' zur Ansteuerung der Motoren 15, 20 umgewandelt.

Obwohl die vorliegende Erfindung vorstehend anhand eines bevorzugten Ausführungsbeispiels beschrieben wurde, ist sie darauf nicht beschränkt, sondern auf vielfältige Weise modifizierbar. In der mit Bezug auf Fig. 2 beschriebenen Ausführungsform, welche die Krafterfassungseinrichtung 25 am Hebel 10 zur Generierung einer Regelgröße bzw. Feedback-Größe aufweist, besteht grundsätzlich auch die Möglichkeit, nur auf Basis der Ist-Winkellage 32 sowie der Ist-Position 33 der Läufer der Servomotoren 20, 15 unter Bezugnahme auf die aktuellen Stromsollwerte 34, 36, welche direkt proportional zum aktuell anliegenden Drehmoment bzw. zur aktuell anliegenden Kraft sind, zu schließen.

Darüber hinaus ist die Blockbildung in den einzelnen Blockdiagrammen beispielhaft zu betrachten. Ansteuersignale und Sollwerte können sowohl als Strompegel, als Spannungspegel und/oder als Digitalworte, beispielsweise über einen Lichtwellenleiter, zugeführt an den einzelnen Einrichtungen anliegen, wobei die Treiberendstufen 35, 37 vorzugsweise Stromsignale 34', 36' ausgeben. Auch ist die vorliegende Erfindung nicht allein zur Simulation eines Schaltgetriebes eines Kfz vorgesehen, sondern kann beliebige andere Bedieneinrichtungen nachbilden, wie z.B. Flugzeug- oder Helikoptersteuereinrichtungen.

## Patentansprüche

1. Vorrichtung zur Simulation einer manuellen Bedieneinrichtung mit:
einem Hebel (10) mit einem oberen und einem unteren Ende (12, 12'), welcher eine erste Drehachse (11) im wesentlichen senkrecht zur Längserstreckung des Hebels (10) und eine zweite Drehachse (16) im wesentlichen senkrecht zur ersten Drehachse (11) und zur Erstreckung des Hebels (10) aufweist;
einem rotatorischen Servomotor (20), welcher läuferseitig an die zweite Drehachse (16) des Hebels (10) gekoppelt ist, zum Bereitstellen eines vorbestimmten Drehmoments bei einer vorbestimmten Ist-Winkellage (32) oder Ist-Geschwindigkeit des Hebels (10); und
einem Linearmotor (15), welcher läuferseitig mit dem Hebel (10) gekoppelt ist, zum Bereitstellen einer vorbestimmten Kraft bei einer vorbestimmten Ist-Position (33) oder Ist-Winkellage des Hebels (10).

2. Simulationsvorrichtung nach Anspruch 1, **dadurch gekennzeichnet,**
**daß** der rotatorische Servomotor (20) direkt an die zweite Drehachse (16) und der Linearmotor (15) über eine Schubstange (13) an ein unteres Ende (12') des Hebels (10) gekoppelt ist, wobei sich der Hebel (10) mit dem unteren Ende (12') über die erste Drehachse (11) hinaus erstreckt.

3. Simulationsvorrichtung nach Anspruch 1 oder 2, **dadurch gekennzeichnet, daß** der Linearmotor (15) und der rotatorische Servomotor (20) jeweils an eine Treiberstufe (35, 37) zum Bereitstellen eines vorbestimmten Stromes (34', 36') abhängig von der jeweiligen Ist-Position/Winkellage (33, 32) des Hebels (10) angeschlossen sind.

4. Simulationsvorrichtung nach einem der vorangehenden Ansprüche, **dadurch gekennzeichnet, daß** eine gemeinsame Schnittstelleneinrichtung (31) zum Ausgeben jeweils eines Stromsollwertes (34, 36) in Abhängigkeit von der Ist-Position (33) des Linearmotors (15) und der Winkellage (32) des rotatorischen Servomotors (20) vorgesehen ist.

5. Simulationsvorrichtung nach Anspruch 4, **dadurch gekennzeichnet, daß** die Schnittstelleneinrichtung (31) mit einer Rechnereinrichtung (29) zum Erfassen von Ist-Werten (32, 33, 26', 27') und Berechnen und Ausgeben von Sollwerten (34, 36) in Echtzeit, vorzugsweise aus einer Einheit bestehend, verbunden ist.

6. Simulationsvorrichtung nach Anspruch 5, **dadurch gekennzeichnet, daß** an dem Hebel (10) eine Krafterfassungseinrichtung (25) zum Erfassen zumindest einer Rückführungsgröße (26, 27) zur Berechnung der Sollwerte (34, 36) in der Rechnereinrichtung (29) vorgesehen ist.

7. Simulationsvorrichtung nach Anspruch 6, **dadurch gekennzeichnet, daß** die Krafterfassungseinrichtung (25) Dehnungsmeßstreifen und vorzugsweise Meßverstärker (28) zur Erfassung der Biegung des Hebels (10) aufweist.

8. Simulationsvorrichtung nach einem der vorangehenden Ansprüche, **dadurch gekennzeichnet, daß** der Hebel (10), der Linearmotor (15) und der rotatorische Servomotor (20) über eine steife Trägereinrichtung (17) miteinander mechanisch gekoppelt sind.

9. Verfahren zur Simulation einer manuellen Bedieneinrichtung mit den Schritten:
Bereitstellen einer vorbestimmten Kraft bei einer vorbestimmten Ist-Position (33) eines Hebels (10) mittels einem Linearmotor (15), welcher läuferseitig mit dem Hebel (10) gekoppelt ist;
Bereitstellen eines vorbestimmten Drehmoments bei einer vorbestimmten Winkellage (32) des Hebels (10) in Richtung einer zweiten Drehachse (16) mit einem rotatorischen Servomotor (20), welcher läuferseitig an die zweite Drehachse (16) des Hebels (10) gekoppelt ist,
wobei der Hebel (10) ein oberes und unteres Ende (12, 12') aufweist und eine erste Drehachse (11) im wesentlichen senkrecht zur Erstreckung des Hebels (10) liegt und die zweite Drehachse (16) im wesentlichen senkrecht zur ersten Drehachse (11) und zur Erstreckung des Hebels (10) liegt.

10. Simulationsverfahren nach Anspruch 9, **dadurch gekennzeichnet, daß** in Abhängigkeit von einer Ist-Position (33) des Linearmotors (15), von der Winkellage (32) des rotatorischen Servomotors (20) und von einer auf den Hebel (10) wirkenden Ist-Kraft (26, 27) anhand eines Rechenmodells in Echtzeit jeweils ein Soll-Kraft-/Drehmomentwert der Motoren (15, 20) auf einer Rechnereinrichtung (29) ermittelt wird.

11. Simulationsverfahren nach Anspruch 10, **dadurch gekennzeichnet, daß** der in Echtzeit errechnete Kraft-/Drehmomentwert über einen Kraft-/Drehmomentregler (S2) an eine Ansteuereinrichtung (S3) weitergegeben wird, welche jeweils eine Motorendstufe (37, 35) des Linearmotors (15) und des rotatorischen Servomotors (20) zum Bereitstellen eines entsprechenden Stromes (36', 34') zur Kraft-/Drehmomenterzeugung ansteuert.

12. Simulationsverfahren nach einem der vorangehenden Ansprüche 9 bis 11, **dadurch gekennzeichnet, daß** Daten und Parameter, welche bei der Simulation generiert und/oder benötigt und/oder verarbeitet werden, über eine Bedienoberfläche (38) als Softwaretool auf einer Rechnereinrichtung (29), vorzugsweise mit einem Host-PC (30), überwacht und/oder abgeändert werden.

13. Simulationsverfahren nach einem der vorangehenden Ansprüche 9 bis 12, **dadurch gekennzeichnet, daß** durch die Simulation die Haptik eines realen Kfz-Getriebes nachgebildet wird.

14. Simulationsverfahren nach einem der vorangehenden Ansprüche 9 bis 13, **dadurch gekennzeichnet, daß** eine simulierte Fahrgeschwindigkeit und/oder Fahrwiderstände, insbesondere Luftreibung und/oder eine Steigung, und/oder die Position einer simulierten Kupplung und/oder eine Motordrehzahl und/oder Verspannungen im Antriebsstrang bei simulierter Kurvenfahrt in die Simulation der Schalthaptik für ein Kfz-Getriebe miteinfließt.

15. Simulationsverfahren nach einem der vorangehenden Ansprüche 9 bis 14, **dadurch gekennzeichnet, daß** über Dehnmessstreifen am Hebel (10) eine Rückführungsgröße (26, 27) gewonnen wird, welche bei einer Sollwertermittlung zur Ansteuerung der Motoren (15, 20) in einer Rechnereinrichtung (29) eingesetzt wird.
